# EUROPEAN PATENT SPECIFICATION

(11) **EP 2 368 223 B1**
(45) Date of publication and mention of the grant of the patent: **24.07.2013**
(21) Application number: 09801333.7
(22) Date of filing: 08.12.2009
(51) Int. Cl.: G06Q 20/12, G06Q 20/40, G06Q 40/00, G06Q 20/00, H04L 9/00

(54) **TECHNIQUE FOR PERFORMING FINANCIAL TRANSACTIONS OVER A NETWORK**
TECHNIK ZUM DURCHFÜHREN VON FINANZTRANSAKTIONEN ÜBER EIN NETZWERK
TECHNIQUE PERMETTANT D'EFFECTUER DES TRANSACTIONS FINANCIÈRES SUR UN RÉSEAU

(30) Priority: 24.12.2008 US 343618
(43) Date of publication of application: 28.09.2011
(73) Proprietor: Intuit Inc., Mountain View, CA 94043 (US)
(72) Inventor: SLATER, Richard L., Mountain View California 94043 (US)
(74) Representative: Davies, Simon Robert
(86) International application number: PCT/US2009/067177
(87) International publication number: WO 2010/074962

(56) References cited:
- KR-A- 20040 089 120
- KR-A- 20050 035 461
- KR-A- 20060 090 991
- US-A- 5 781 632
- US-A1- 2008 283 591

## Description

### BACKGROUND

The present invention relates to techniques for performing financial transactions over a network.

Businesses and financial institutions have made significant investments in financial infrastructure (including hardware and software) to supports secure processing of financial transactions between customers and businesses. For example, many businesses have front-end processors (such as point-of-sale terminals) that receive customer financial information (such as credit- or debit-card information) associated with financial transactions. These front-end processors communicate the customer financial information to back-end processors (which are sometimes referred to as 'acquirer processors'), which, in turn, interact with financial institutions to determine whether or not a given financial transaction is approved or declined.

Unfortunately, different businesses and financial institutions use different variations of the financial infrastructure, and these variations are often incompatible with each other. For example, different debit-card payment processing systems (such as the Star Cash System™, New York Cash Exchange™, Honor™, Interlink™ and Maestro™) use different encryption key zones to each acquirer processor and each acquirer processor uses different encryption key zones to their respective merchants. Consequently, consumers are typically only able to use their debit card at the physical location of a merchant. Thus, creditor debit-card payment processing systems include financial infrastructure (such as registered personal identification number or *PIN* pads) that are uniquely associated with particular businesses.

Unfortunately, this incompatible financial infrastructure can present obstacles to commerce, especially online commerce (which is sometimes referred to as e-commerce). In particular, online customers typically do not have access to the unique financial infrastructure for a given business, let alone the different variations which are used by other businesses. These obstacles make it difficult for customers to use the existing financial infrastructure to perform secure online financial transactions. Furthermore, the significant investment made by businesses and financial institutions in the existing financial infrastructure makes it unlikely that businesses will solve this problem by replacing the existing financial infrastructure with a new financial infrastructure.

US 5781632 discloses a method and apparatus that allows Internet users to purchase or order goods and services through the Internet by permitting the secured transmission of sensitive financial information. Messages are encrypted and locked with a randomly generated encryption key to which only the user has access. Furthermore, a unique customer number is assigned to each user for identification purposes. Encrypted messages are intercepted in-transmission by a switch which deencrypts the message and verifies that the request originated from an authorized customer and that the data string has maintained integrity. The request is then reencrypted with the intended recipient's unique encryption key and transmitted on the Internet to the recipient. The request may include sensitive customer credit information which may be routed to a merchant, financial institution or credit authorizer in order to make purchases or place orders through the Internet.

### SUMMARY

The invention is defined in the appended claims.

### BRIEF DESCRIPTION OF THE FIGURES

FIG. 1A is a drawing illustrating an existing financial-transaction technique for performing a financial transaction.

FIG. 1B is a drawing illustrating a financial-transaction technique for performing a financial transaction over a network in accordance with an embodiment of the present invention.

FIG. 1C is a drawing illustrating a financial-transaction technique for performing a financial transaction over a network in accordance with an embodiment of the present invention.

FIG. 2 is a flow chart illustrating a process for performing a financial transaction over a network in accordance with an embodiment of the present invention.

FIG. 3 is a block diagram illustrating a networked computer system that performs a financial transaction over a network in accordance with an embodiment of the present invention.

FIG. 4 is a block diagram illustrating a computer system that performs a financial transaction over a network in accordance with an embodiment of the present invention.

FIG. 5 is a block diagram illustrating a data structure in accordance with an embodiment of the present invention.

Note that like reference numerals refer to corresponding parts throughout the drawings.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

Embodiments of a system (such as a computer system), a method, and a computer-program product (*e.g.,* software) for use with the computer system are described. These embodiments may be used to perform financial transactions over a network. In particular, the system allows customers to use personal *PIN* pads when conducting financial transactions (such as debit-card transactions) with multiple merchants and their associated acquirer processors (which assist the merchants in processing financial transactions), even though different groups of merchants and acquirer processors may use different encryption techniques. For a given financial transaction, this capability may be implemented by decrypting financial information associated with a personal *PIN* pad from a customer and re-encrypting it using a separate encryption technique of a merchant and the associated acquirer processor.

By decrypting and re-encrypting financial information using this financial-transaction technique, customers may be able to perform financial transactions over networks (such as the Internet and/or a wireless network) using the existing encryption-key management techniques, such as those associated with debit cards. Moreover, this financial-transaction technique may allow a given customer to use a common personal *PIN* pad to conduct transactions with different groups of merchants and their associated acquirer processors, even though this involves the use of different encryption techniques. Consequently, this financial-transaction technique may facilitate secure commerce over these networks, with a minimum change in the existing financial infrastructure, thereby reducing associated costs and aggravation for merchants, acquirer processors and banks.

In the discussion that follows, debit-card transactions are used as an illustrative example of the financial-transaction technique. However, the financial-transaction technique may be used to facilitate a wide variety of financial transactions over networks, including cash withdrawals, cash advances, wire transfers and credit-card transactions.

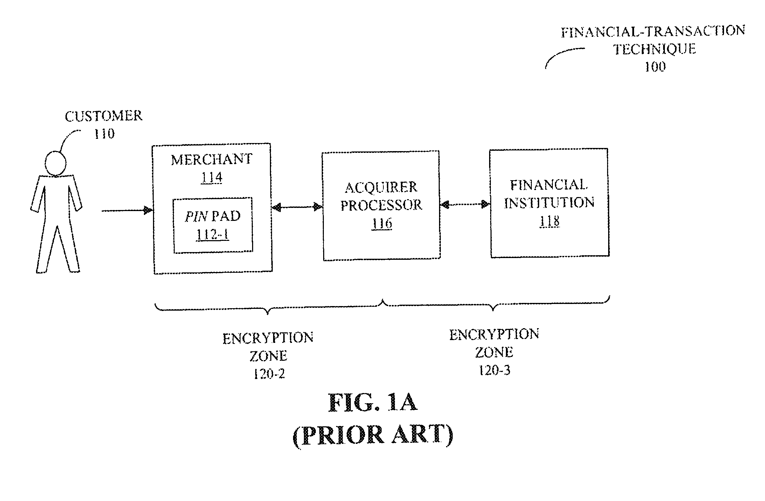

We now describe embodiments of a process for performing financial transactions over a network. FIG. 1A presents a drawing illustrating an existing financial-transaction technique 100 for performing a financial transaction. In this financial-transaction technique, a customer 110 conducts a financial transaction with a merchant 114 (such as purchasing a service or a product) using a debit card by providing financial information associated with the debit card. This financial information includes a *PIN* code that the customer 110 types into a registered *PIN* pad 112-1, which is uniquely associated with the merchant 114. *PIN* pad 112-1 encrypts the *PIN* code using a second encryption technique. This encryption technique is used throughout encryption zone 120-2, which includes merchant 114 and an acquirer processor 116 (which is sometimes referred to as a 'host'). As described further below, acquirer processor 116 is an intermediary that processes financial transactions from merchants (such as merchant 114), forwards information associated with the financial transaction to financial institutions (such as financial institution 118), and settles authorized financial transactions.

After receiving the encrypted *PIN* code and additional financial information associated with the debit card (such as a user name and debit-card number), merchant 114 forwards the encrypted *PIN* code, the additional financial information, merchant information and *PIN-*pad information to acquirer processor 116 via a host network. Acquirer processor 116 translates the encrypted *PIN* code from the second encryption technique (which is shared in encryption zone 120-2) to a third encryption technique that is used throughout encryption zone 120-3, which includes acquirer processor 116 and financial institution 118 (such as a bank). In particular, acquirer processor 116 decrypts the encrypted *PIN* code using the second encryption technique and re-encrypts the decrypted *PIN* code using the third encryption technique prior to sending the re-encrypted *PIN* code, as well as the other financial information provided by merchant 114, to financial institution 118 via a debit-card network.

Once the financial institution 118 receives this financial information, a determination is made as to whether to approve or decline the financial transaction, and the resulting decision is communicated to merchant 114 by acquirer processor 116.

However, as noted previously, it is often difficult for customers to use existing financial-transaction technique 100 when they attempt to perform financial transactions over a network, such as a wireless network (*e.g.,* using a cellular telephone) or the Internet. For example, it is difficult for customers to use debit cards to conduct financial transactions via the Internet because registered *PIN* pads (such as *PIN* pad 112-1) are associated with merchants (such as merchant 114), and different merchants and acquirer processors typically use different (incompatible) encryption techniques.

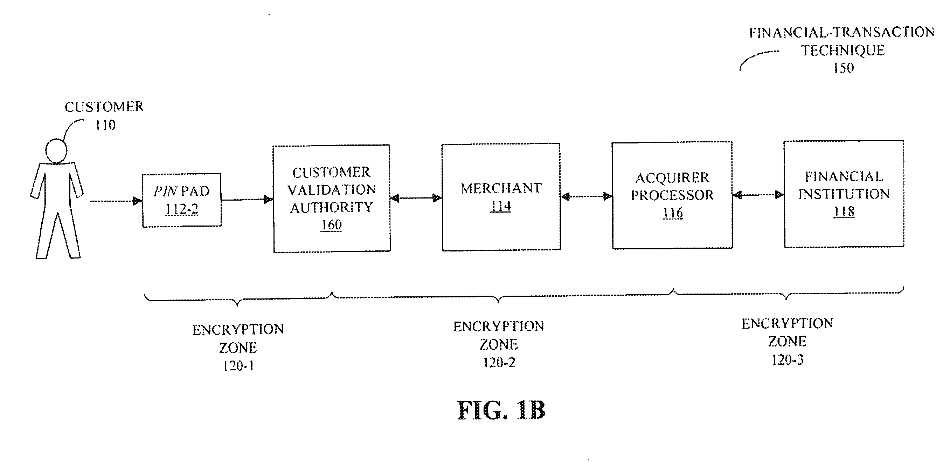

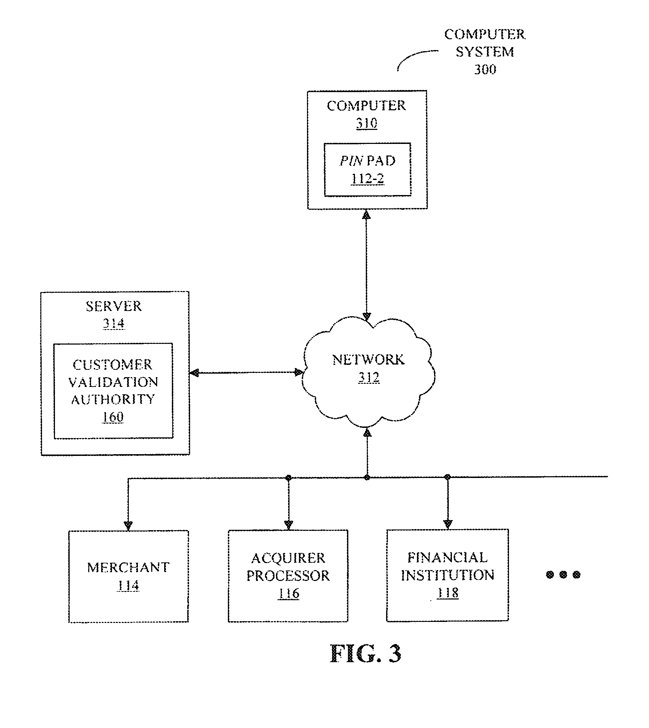

A solution to this problem is shown in FIG. 1B, which presents a drawing illustrating a financial-transaction technique 150 for performing a financial transaction over a network. In this technique, customer 110 is provided with a registered *PIN pad* 112-2, which is uniquely associated with the customer, prior to the financial transaction with merchant 114. (For example, customer 110 may purchase *PIN* pad 112-2 or the debit-card provider may provide *PIN pad* 112-2 to the customer.) As described further below with reference to FIG. 3, during the financial transaction (which is conducted via the network), customer 110 types the *PIN* code associated with the debit card into registered *PIN* pad 112-2 (in addition to providing financial information associated with the debit card). *PIN pad* 112-2 encrypts the *PIN* code using a first encryption technique. This encryption technique is used throughout encryption zone 120-1, which includes *PIN pad* 112-2 and customer validation authority 160.

Customer validation authority 160 translates the encrypted *PIN* code from the first encryption technique (which is shared in encryption zone 120-1) to a second encryption technique that is used throughout encryption zone 120-2. In particular, customer validation authority 160 decrypts the encrypted *PIN* code using the first encryption technique and re-encrypts the decrypted *PIN* code using the second encryption technique prior to sending the re-encrypted *PIN code,* as well as the other financial information provided by customer 110, to merchant 114 via the host network. Subsequent processing of the financial transaction proceeds as described previously in the discussion of FIG. 1A.

In an exemplary embodiment, one or more of the encryption techniques in one or more of the encryption zones 120 includes derived unique key per transaction *(DUKPT),* which changes the encoding for each financial transaction to enhance security. Moreover, the *DUKPT* technique may utilize a data encryption standard (*DES*)*,* triple *DES,* or another encryption technique known to one of skill in the art.

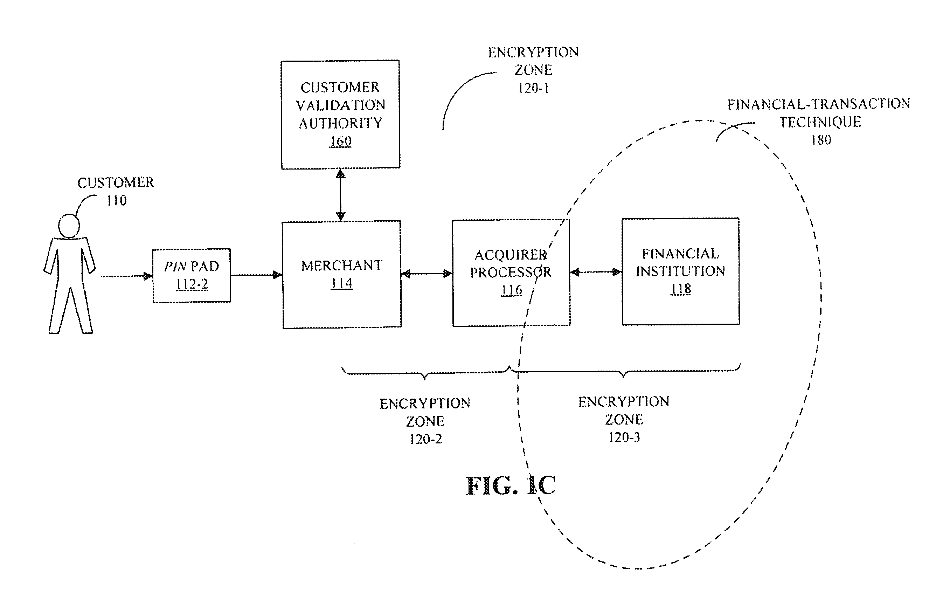

As shown in FIG. 1C, which presents a drawing illustrating a financial-transaction technique 180 for performing a financial transaction over a network, in another embodiment financial information associated with the financial transaction is provided by customer 110 via *PIN* pad 112-2 to merchant 114. Merchant 114 provides this information to customer validation authority 160, which performs the encryption translation from encryption zone 120-1 to encryption zone 120-2. Then, the financial information (including the re-encrypted *PIN* code) is provided to merchant 114 for subsequent processing as described previously in the discussion of FIG. 1A.

Customer validation authority 160 and encryption zone 120-1 enable customers to conduct financial transactions using debit cards via the Internet. Moreover, a given customer (such as customer 110) can interact with multiple merchants, and thus, with multiple associated acquirer processors, using registered *PIN pad* 112-2, even though the host networks associated with these merchants and acquirer processors use different encryption techniques. Consequently, financial-transaction techniques 150 (FIG. 1B) and 180 facilitate secure e-commerce via networks, with a minimum change in the existing financial infrastructure, thereby reducing associated costs and aggravation for merchants, acquirer processors and financial institutions.

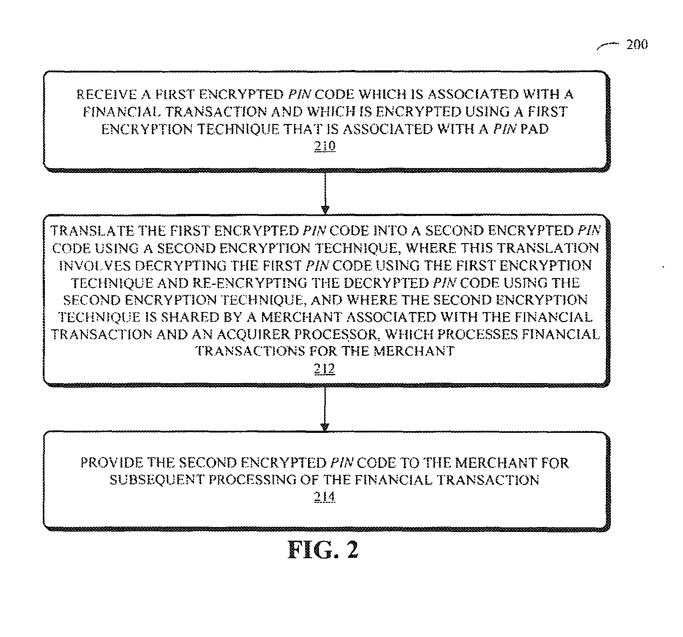

FIG. 2 presents a flow chart illustrating a process 200 for performing a financial transaction over a network, which may be performed by a system (such as a computer system, for example, customer validation authority 160 in FIGs. 1B and 1C). During operation, the system receives a first encrypted *PIN code* which is associated with the financial transaction and which is encrypted using a first encryption technique that is associated with a *PIN* pad (210). Next, the system translates the first encrypted *PIN code* into a second encrypted *PIN* code using a second encryption technique (212). This translation involves decrypting the first encrypted *PIN* code using the first encryption technique and re-encrypting the decrypted *PIN code* using the second encryption code. Moreover, the second encryption technique is shared by a merchant associated with the financial transaction and an acquirer processor, which processes financial transactions for the merchant. Then, the system provides the second encrypted *PIN* code to the merchant for subsequent processing of the financial transaction (214).

In some embodiments of process 200, there may be additional or fewer operations. For example, in addition to the first encrypted *PIN* code, the system may receive first encrypted financial information which is associated with the financial transaction (such as additional financial information associated with a debit card) and which is encrypted using the first encryption technique. Then, the system may translate the first encrypted financial information into the second encrypted financial information using the second encryption technique, and the system may provide the second encrypted financial information to the merchant for subsequent processing of the financial transaction. Moreover, the order of the operations may be changed, and/or two or more operations may be combined into a single operation.

We now describe embodiments of a computer system that performs process 200. FIG. 3 presents a block diagram illustrating a networked computer system 300 that performs a financial transaction over a network. In this computer system, a user of computer 310 (such as customer 110 in FIGs. 1 Band 1 C) may conduct a financial transaction with merchant 114 via network 312. For example, the user may access a web page or website hosted by a server associated with merchant 114 using a web browser that is resident on and which executes on computer 310. Alternatively, the user may provide financial information associated with the financial transaction using a financial-transaction tool that executes on computer 310 or in a computing environment on computer 310 (for example, the financial-transaction tool may be embedded in a web page that is rendered by the web browser based on instructions provided by server 314 or merchant 114).

Note that this financial-transaction tool may be a stand-alone application or a portion of another application (such as financial software that is resident on and/or that executes on server 314). This financial-transaction tool may perform non-encryption aspects of the financial transaction. In an illustrative embodiment, the financial-transaction tool is a software package written in: JavaScript™ (a trademark of Sun Microsystems, Inc.), e.g., the financial-transaction tool includes programs or procedures containing JavaScript instructions, ECMAScript (the specification for which is published by the European Computer Manufacturers Association International), VBScript™ (a trademark of Microsoft, Inc.) or any other client-side scripting language. In other words, the embedded financial-transaction tool may include programs or procedures containing: JavaScript, ECMAScript instructions, VBScript instructions, or instructions in another programming language suitable for rendering by a web browser or another client application on the computer 310.

During the financial transaction, the user provides the financial information associated with the debit card (including the *PIN* code) to computer 310 and/or personal *PIN* pad 112-2. This information is either communicated, via network 312, to merchant 114 and then to customer validation authority 160 (which is resident on and which executes on server 314), or is communicated, via network 312, to customer validation authority 160 and then to merchant 114. In either embodiment, customer validation authority 160 translates the encrypted *PIN* code and/or encrypted additional financial information from a first encryption zone (associated with personal *PIN* pad 112-2) to a second encryption zone (associated with merchant 114 and acquirer processor 116). Subsequent processing of the financial transaction may proceed between merchant 114, acquirer processor 116 and one or more financial institutions (such as financial institution 118) via network 312, as described previously with reference to FIG. 1A.

In order for customer validation authority 160 to perform the translation from the first encryption zone to the second encryption zone, customer validation authority 160 needs to have access to appropriate encryption techniques for the user, as well as for merchant 114 and acquirer processor 116. For example, customer validation authority 160 may have access to this information based on business relationships with the user, merchant 114, acquirer processor 116, and/or financial institution 118. These business relationships may be associated with the financial software. For example, the user, merchant 114, acquirer processor 116, and/or financial institution 118 may use the financial software to conduct financial transactions, to perform financial planning, to generate a payroll and/or to perform financial accounting.

In general, information, such as encryption keys associated with one or more encryption techniques, may be stored at one or more locations in computer system 300 (*i.e.,* locally or remotely). Moreover, because this information may be sensitive information, it may be encrypted. For example, stored information and/or information communicated via network 312 may be encrypted.

Computers and servers in computer system 300 may include one of a variety of devices capable of manipulating computer-readable data or communicating such data between two or more computing systems over a network, including: a personal computer, a laptop computer, a mainframe computer, a portable electronic device (such as a cellular phone or *PDA),* a server and/or a client computer (in a client-server architecture). Moreover, network 312 may include: the Internet, World Wide Web (*WWW*)*,* an intranet, *LAN, WAN, MAN,* or a combination of networks, or other technology enabling communication between computing systems.

In exemplary embodiments, the financial software includes software such as: Quicken™ and/or TurboTax™ (from Intuit, Inc., of Mountain View, California), Microsoft Money™ (from Microsoft Corporation, of Redmond, Washington), SplashMoney™ (from SplashData, Inc., of Los Gatos, CA), Mvelopes™ (from In2M, Inc., of Draper, Utah), and/or open-source applications such as Gnucash™, PLCash™, Budget™ (from Snowmint Creative Solutions, LLC, of St. Paul, Minnesota), and/or other planning software capable of processing financial information.

Moreover, the financial software may include software such as: QuickBooks™ (from Intuit, Inc., of Mountain View, California), Peachtree™ (from The Sage Group PLC, of Newcastle Upon Tyne, the United Kingdom), Peachtree Complete™ (from The Sage Group PLC, of Newcastle Upon Tyne, the United Kingdom), MYOB Business Essentials™ (from MYOB US, Inc., of Rockaway, New Jersey), NetSuite Small Business Accounting™ (from NetSuite, Inc., of San Mateo, California), Cougar Mountain™ (from Cougar Mountain Software, of Boise, Idaho), Microsoft Office Accounting™ (from Microsoft Corporation, of Redmond, Washington), Simply Accounting™ (from The Sage Group PLC, of Newcastle Upon Tyne, the United Kingdom), CYMA IV Accounting™ (from CYMA Systems, Inc., of Tempe, Arizona), DacEasy™ (from Sage Software SB, Inc., of Lawrenceville, Georgia), Microsoft Money™ (from Microsoft Corporation, of Redmond, Washington), and/or other payroll or accounting software capable of processing payroll information.

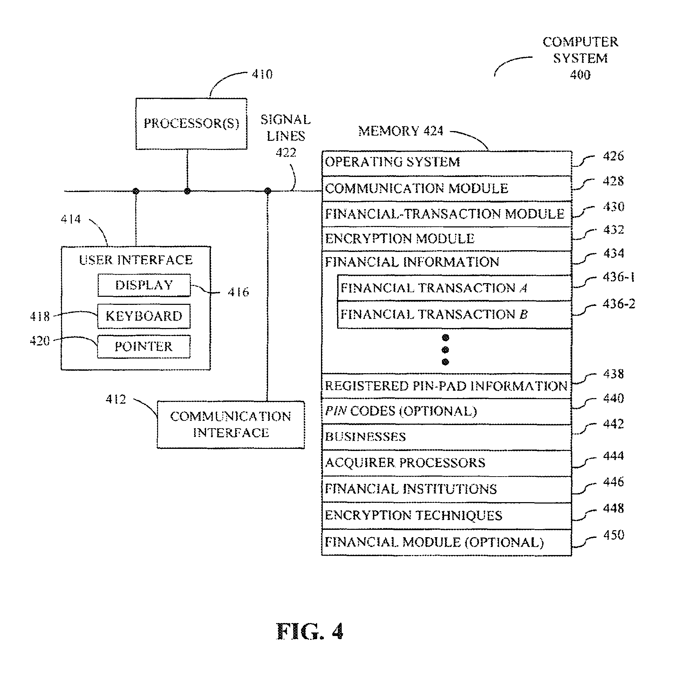

FIG. 4 presents a block diagram illustrating a computer system 400 that performs a financial transaction over a network. Computer system 400 includes one or more processors 410, a communication interface 412, a user interface 414, and one or more signal lines 422 coupling these components together. Note that the one or more processing units 410 may support parallel processing and/or multi-threaded operation, the communication interface 412 may have a persistent communication connection, and the one or more signal lines 422 may constitute a communication bus. Moreover, the user interface 414 may include: a display 416, a keyboard 418, and/or a pointer 420, such as a mouse.

Memory 424 in the computer system 400 may include volatile memory and/or non-volatile memory. More specifically, memory 424 may include: *ROAM, RAM, EPROM, EEPROM,* flash memory, one or more smart cards, one or more magnetic disc storage devices, and/or one or more optical storage devices. Memory 424 may store an operating system 426 that includes procedures (or a set of instructions) for handling various basic system services for performing hardware-dependent tasks. While not explicitly indicated in the computer system 400, in some embodiments the operating system 426 includes a web browser. Memory 424 may also store procedures (or a set of instructions) in a communication module 428. These communication procedures may be used for communicating with one or more computers and/or servers, including computers and/or servers that are remotely located with respect to the computer system 400.

Memory 424 may also include multiple program modules (or sets of instructions), including: financial-transaction module 430 (or a set of instructions), encryption module 432, and optional financial module 450 (or a set of instructions). Using financial-transaction module 430, customers may provide financial information 434 associated with financial transactions, such as financial transaction *A* 436-1 and financial transaction *B* 436-2. This financial information may include encrypted *PIN* codes for debit cards. These encrypted *PIN* codes may be encrypted using encryption techniques 448 that are uniquely associated with corresponding *PIN* pads. Moreover, this unique correspondence may be included in registered *PIN-*pad information 438. In some embodiments, the financial information 434 is provided by the customers directly to computer system 400. Alternatively, at least some of the financial information 434 may be provided by the customers to businesses 442 (such as merchants), which provide the financial information 434 to computer system 400.

Financial-transaction module 430 (which performs at least some of the operations associated with customer validation authority 160 in FIGs. 1B, 1C and 3) may translate the encrypted *PIN* codes from one encryption zone to another using encryption module 432 and one or more encryption techniques 448. Note that encryption techniques associated with the other encryption zone may correspond to businesses 442, acquirer processors 444, and/or financial institutions 446. After this translation, financial-transaction module 430 may provide the re-encrypted *PIN* codes and/or additional encrypted financial information associated with the financial transactions to businesses 442 for subsequent processing via a host network. In some embodiments, during the translation operation, optional decrypted *PIN* codes 440 are stored in memory 424.

Note that in some embodiments, at least some of the financial information 434 is obtained or is associated with optional financial module 450 (such as the financial software).

Instructions in the various modules in the memory 424 may be implemented in: a high-level procedural language, an object-oriented programming language, and/or in an assembly or machine language. Note that the programming language may be compiled or interpreted, e.g., configurable or configured, to be executed by the one or more processing units 410.

Although the computer system 400 is illustrated as having a number of discrete items, FIG. 4 is intended to be a functional description of the various features that may be present in the computer system 400 rather than a structural schematic of the embodiments described herein. In practice, and as recognized by those of ordinary skill in the art, the functions of the computer system 400 may be distributed over a large number of servers or computers, with various groups of the servers or computers performing particular subsets of the functions. In some embodiments, some or all of the functionality of the computer system 400 may be implemented in one or more application-specific integrated circuits *(ASICs)* and/or one or more digital signal processors *(DSPs).*

Computer systems 300 (FIG. 3) and/or 400 may include fewer components or additional components. Moreover, two or more components may be combined into a single component, and/or a position of one or more components may be changed. In some embodiments, the functionality of the computer system 400 may be implemented more in hardware and less in software, or less in hardware and more in software, as is known in the art.

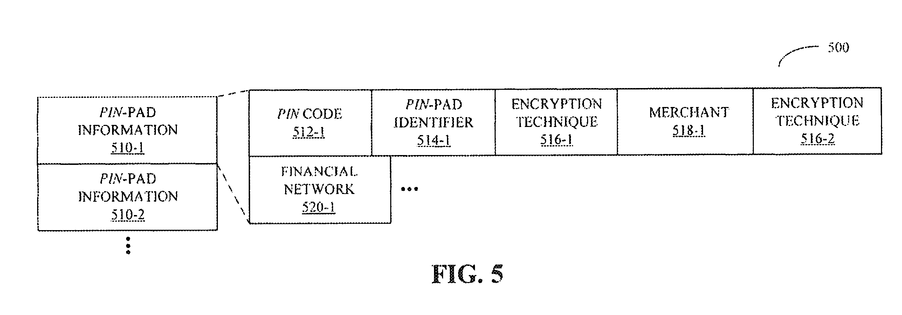

We now discuss data structures that may be used in computer system 300 (FIG. 3) and/or 400. FIG. 5 presents a block diagram illustrating a data structure 500. This data structure may include *PIN*-pad information 510 for one or more registered personal *PIN* pads. For example, *PIN*-pad information 510-1 may include: a *PIN* code 512-1, a *PIN-*pad identifier 514-1, an encryption technique 516-1 associated with a first encryption zone (which includes the *PIN* pad and a customer validation authority), a merchant 518-1, an encryption technique 516-2 associated with a second encryption zone (which includes merchant 518-1 and an acquirer processor in a host network), and a financial network 520-1 (such as the host network).

Note that in some embodiments of data structure 500 there may be fewer or additional components. Moreover, two or more components may be combined into a single component, and/or a position of one or more components may be changed.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A method for performing a financial transaction over a network (312), comprising:
receiving, from a customer (110), a first encrypted personal identification number *(PIN)* code which is associated with the financial transaction and which is encrypted using a first encryption technique that is associated with a *PIN* pad (112-2), wherein the PIN pad is uniquely associated with the customer, and wherein the first encryption technique is uniquely associated with the PIN pad;
translating the first encrypted *PIN* code into a second encrypted *PIN* code using a second encryption technique, wherein the translating involves decrypting the first encrypted *PIN* code using the first encryption technique and re-encrypting the decrypted *PIN* code using the second encryption technique, wherein the second encryption technique is shared by a merchant (114) associated with the financial transaction and an acquirer processor (116), which processes financial transactions for the merchant; and
providing the second encrypted *PIN* code to the merchant for subsequent processing of the financial transaction.

2. The method of claim 1, wherein the network includes the Internet.

3. The method of claim 1, wherein the network includes a wireless network.

4. The method of claim 1, wherein the financial transaction is associated with a debit card.

5. The method of claim 1, further comprising:
receiving first encrypted financial information which is associated with the financial transaction and which is encrypted using the first encryption technique;
translating the first encrypted financial information into the second encrypted financial information using the second encryption technique; and
providing the second encrypted financial information to the merchant for subsequent processing of the financial transaction.

6. The method of claim 1, wherein the method facilitates financial transactions between a customer and groups of merchants and associated acquirer processors; and
wherein a given group of merchants and the associated acquirer processor use a different encryption technique than other groups of merchants and their associated acquirer processors.

7. The method of claim 1, wherein the first encryption technique and the second encryption technique include derived unique key per transaction *(DUKPT).*

8. A computer program comprising instructions for implementing the method of any preceding claim.

9. A computer system for performing a financial transaction over a network, comprising:
a processor;
memory;
a program module, wherein the program module is stored in the memory and configured to be executed by the processor, the program module including:
instructions for receiving, from a customer, a first encrypted *PIN* code which is associated with the financial transaction and which is encrypted using a first encryption technique that is associated with a *PIN pad,* wherein the PIN pad is uniquely associated with the customer, and wherein the first encryption technique is uniquely associated with the PIN pad;
instructions for translating the first encrypted *PIN* code into a second encrypted *PIN* code using a second encryption technique, wherein the translating involves decrypting the first encrypted *PIN* code using the first encryption technique and re-encrypting the decrypted *PIN* code using the second encryption technique, wherein the second encryption technique is shared by a merchant associated with the financial transaction and an acquirer processor, which processes financial transactions for the merchant; and
instructions for providing the second encrypted *PIN* code to the merchant for subsequent processing of the financial transaction.

10. The computer system of claim 9, wherein the network includes the Internet.

11. The computer system of claim 9, wherein the network includes a wireless network.

12. The computer system of claim 9, further comprising:
means for receiving first encrypted financial information which is associated with the financial transaction and which is encrypted using the first encryption technique;
means for translating the first encrypted financial information into the second encrypted financial information using the second encryption technique; and
means for providing the second encrypted financial information to the merchant for subsequent processing of the financial transaction.

13. The computer system of claim 9, wherein the computer system facilitates financial transactions between a customer and groups of merchants and associated acquirer processors; and
wherein a given group of merchants and the associated acquirer processor use a different encryption technique than other groups of merchants and their associated acquirer processors.

14. The computer system of claim 9, wherein the first encryption technique and the second encryption technique include derived unique key per transaction *(DUKPT).*

## Patentansprüche

1. Verfahren zum Durchführen einer Finanztransaktion über ein Netzwerk (312), das die folgenden Schritte aufweist:
Empfangen von einem Kunden (110) eines ersten verschlüsselten persönlichen Identifikationsnummern (PIN)-Codes, der mit der Finanztransaktion verbunden ist und der mittels einer ersten Verschlüsselungstechnik verschlüsselt wird, die mit einem PIN-Tastenfeld (112-2) verbunden ist, wobei das PIN-Tastenfeld eindeutig mit dem Kunden verbunden ist, und wobei die erste Verschlüsselungstechnik eindeutig mit dem PIN-Tastenfeld verbunden ist;
Übersetzen des ersten verschlüsselten PIN-Codes in einen zweiten verschlüsselten PIN-Code mittels einer zweiten Verschlüsselungstechnik, wobei das Übersetzen das Entschlüsseln des ersten verschlüsselten PIN-Codes mittels der ersten Verschlüsselungstechnik und erneutes Verschlüsseln des entschlüsselten PIN-Codes mittels der zweiten Verschlüsselungstechnik umfasst, wobei die zweite Verschlüsselungstechnik durch einen Händler (114), der mit der Finanztransaktion verbunden ist, und einen Händlerbankprozessor (116) gemeinsam genutzt wird, der Finanztransaktionen für den Händler verarbeitet; und
Liefern des zweiten verschlüsselten PIN-Codes an den Händler zur anschließenden Verarbeitung der Finanztransaktion.

2. Verfahren nach Anspruch 1, wobei das Netzwerk das Internet umfasst.

3. Verfahren nach Anspruch 1, wobei das Netzwerk ein drahtloses Netzwerk umfasst.

4. Verfahren nach Anspruch 1, wobei die Finanztransaktion mit einer Bankkarte verbunden ist.

5. Verfahren nach Anspruch 1, das ferner Folgendes aufweist:
Empfangen erster verschlüsselter Finanzinformationen, die mit der Finanztransaktion verbunden sind und die mittels der ersten Verschlüsselungstechnik verschlüsselt werden;
Übersetzen der ersten verschlüsselten Finanzinformationen in die zweiten verschlüsselten Finanzinformationen mittels der zweiten Verschlüsselungstechnik; und
Liefern der zweiten verschlüsselten Finanzinformationen an den Händler zur anschließenden Verarbeitung der Finanztransaktion.

6. Verfahren nach Anspruch 1, wobei das Verfahren Finanztransaktionen zwischen einem Kunden und Gruppen von Händlern und damit verbundenen Händlerbankprozessoren unterstützt; und
wobei eine gegebene Gruppe von Händlern und der damit verbundene Händlerbankprozessor eine andere Verschlüsselungstechnik als andere Gruppen von Händlern und ihre damit verbundenen Händlerbankprozessoren verwenden.

7. Verfahren nach Anspruch 1, wobei die erste Verschlüsselungstechnik und die zweite Verschlüsselungstechnik einen abgeleiteten eindeutigen Schlüssel pro Transaktion (DUKPT) umfassen.

8. Computerprogramm, das Befehle zur Umsetzung des Verfahrens nach einem der vorhergehenden Ansprüche aufweist.

9. Computersystem zur Durchführung einer Finanztransaktion über ein Netzwerk, das Folgendes aufweist:
einen Prozessor;
Speicher;
ein Programmmodul, wobei das Programmmodul im Speicher gespeichert und konfiguriert ist, durch den Prozessor ausgeführt zu werden, wobei das Programmmodul Folgendes aufweist:
Befehle zum Empfangen von einem Kunden eines ersten verschlüsselten PIN-Codes, der mit der Finanztransaktion verbunden ist und der mittels einer ersten Verschlüsselungstechnik verschlüsselt wird, die mit einem PIN-Tastenfeld verbunden ist, wobei das PIN-Tastenfeld eindeutig mit dem Kunden verbunden ist, und wobei die erste Verschlüsselungstechnik eindeutig mit dem PIN-Tastenfeld verbunden ist;
Befehle zum Übersetzen des ersten verschlüsselten PIN-Codes in einen zweiten verschlüsselten PIN-Code mittels einer zweiten Verschlüsselungstechnik, wobei das Übersetzen das Entschlüsseln des ersten verschlüsselten PIN-Codes mittels der ersten Verschlüsselungstechnik und das erneute Verschlüsseln des entschlüsselten PIN-Codes mittels der zweiten Verschlüsselungstechnik umfasst, wobei die zweite Verschlüsselungstechnik durch einen Händler, der mit der Finanztransaktion verbunden ist, und einen Händlerbankprozessor gemeinsam genutzt wird, der Finanztransaktionen für den Händler verarbeitet; und
Befehle zum Liefern des zweiten verschlüsselten PIN-Codes an den Händler zur anschließenden Verarbeitung der Finanztransaktion.

10. Computersystem nach Anspruch 9, wobei das Netzwerk das Internet umfasst.

11. Computersystem nach Anspruch 9, wobei das Netzwerk ein drahtloses Netzwerk umfasst.

12. Computersystem nach Anspruch 9, das ferner Folgendes aufweist:
Mittel zum Empfangen erster verschlüsselter Finanzinformationen, die mit der Finanztransaktion verbunden sind und die mittels der ersten Verschlüsselungstechnik verschlüsselt werden;
Mittel zum Übersetzen der ersten verschlüsselten Finanzinformationen in die zweiten verschlüsselten Finanzinformationen mittels der zweiten Verschlüsselungstechnik; und
Mittel zum Liefern der zweiten verschlüsselten Finanzinformationen an den Händler zur anschließenden Verarbeitung der Finanztransaktion.

13. Computersystem nach Anspruch 9, wobei das Computersystem Finanztransaktionen zwischen einem Kunden und Gruppen von Händlern und damit verbundenen Händlerbankprozessoren unterstützt; und
wobei eine gegebene Gruppe von Händlern und der damit verbundene Händlerbankprozessor eine andere Verschlüsselungstechnik als andere Gruppen von Händlern und ihre damit verbundenen Händlerbankprozessoren verwenden.

14. Computersystem nach Anspruch 9, wobei die erste Verschlüsselungstechnik und die zweite Verschlüsselungstechnik einen abgeleiteten eindeutigen Schlüssel pro Transaktion (DUKPT) umfassen.

## Revendications

1. Procédé d'exécution d'une transaction financière sur un réseau (312), comprenant :
la réception, depuis un client (110), d'un premier code de numéro d'identification personnel (*PIN*) crypté qui est associé à la transaction financière et qui est crypté au moyen d'une première technique de cryptage associée à une tablette *PIN* (112-2), dans lequel la tablette PIN est associée exclusivement au client, et dans lequel la première technique de cryptage est associée exclusivement à la tablette *PIN ;*
la traduction du premier code *PIN* crypté en un second code *PIN* crypté au moyen d'une seconde technique de cryptage, la traduction impliquant le décryptage du premier code *PIN* crypté au moyen de la première technique de cryptage et le recryptage du code *PIN* décrypté au moyen de la seconde technique de cryptage, la seconde technique de cryptage étant partagée par un marchand (114) associé à la transaction financière et un processeur acquéreur (116), lequel traite les transactions financières du marchand ; et
la fourniture du second code *PIN* crypté au marchand en vue d'un traitement ultérieur de la transaction financière.

2. Procédé selon la revendication 1, dans lequel le réseau comporte l'Internet.

3. Procédé selon la revendication 1, dans lequel le réseau comporte un réseau sans fil.

4. Procédé selon la revendication 1, dans lequel la transaction financière est associée à une carte de débit.

5. Procédé selon la revendication 1, comprenant en outre :
la réception de premières informations financières cryptées qui sont associées à la transaction financière et qui sont cryptées au moyen de la première technique de cryptage ;
la traduction des premières informations financières cryptées en les secondes informations financières cryptées au moyen de la seconde technique de cryptage ; et
la fourniture des secondes informations financières cryptées au marchand en vue d'un traitement ultérieur de la transaction financière.

6. Procédé selon la revendication 1, le procédé facilitant les transactions financières entre un client et des groupes de marchands et processeurs acquéreurs associés ; et
un groupe donné de marchands et le processeur acquéreur associé utilisant une technique de cryptage différente de celle d'autres groupes de marchands et leurs processeurs acquéreurs associés.

7. Procédé selon la revendication 1, dans lequel la première technique de cryptage et la seconde technique de cryptage comportent une clé unique dérivée par transaction *(DUKPT).*

8. Programme informatique comprenant des instructions pour mettre en oeuvre le procédé selon l'une quelconque des revendications précédentes.

9. Système informatique pour exécuter une transaction financière sur un réseau, comprenant :
un processeur ;
une mémoire ;
un module de programme, le module de programme étant stocké dans la mémoire et configuré pour être exécuté par le processeur, le module de programme comportent :
des instructions pour recevoir, depuis un client, un premier code *PIN* crypté qui est associé à la transaction financière et qui est crypté au moyen d'une première technique de cryptage associée à une tablette *PIN,* dans lequel la tablette PIN est associée exclusivement au client, et dans lequel la première technique de cryptage est associée exclusivement à la tablette PIN ;
des instructions pour traduire le premier code *PIN* crypté en un second code *PIN* crypté au moyen d'une seconde technique de cryptage, la traduction impliquant le décryptage du premier code *PIN* crypté au moyen de la première technique de cryptage et le recryptage du code *PIN* décrypté au moyen de la seconde technique de cryptage, la seconde technique de cryptage étant partagée par un marchand associé à la transaction financière et un processeur acquéreur, lequel traite les transactions financières du marchand ; et
des instructions pour fournir le second code *PIN* crypté au marchand en vue d'un traitement ultérieur de la transaction financière.

10. Système informatique selon la revendication 9, dans lequel le réseau comporte l'Internet.

11. Système informatique selon la revendication 9, dans lequel le réseau comporte un réseau sans fil.

12. Système informatique selon la revendication 9, comprenant en outre :
un moyen de réception de premières informations financières cryptées qui sont associées à la transaction financière et qui sont cryptées au moyen de la première technique de cryptage ;
un moyen de traduction des premières informations financières cryptées en les secondes informations financières cryptées au moyen de la seconde technique de cryptage ; et
un moyen de fourniture des secondes informations financières cryptées au marchand en vue du traitement ultérieur de la transaction financière.

13. Système informatique selon la revendication 9, le système informatique facilitant les transactions financières entre un client et des groupes de marchands et processeurs acquéreurs associés ; et un groupe donné de marchands et le processeur acquéreur associé utilisant une technique de cryptage différente de celle d'autres groupes de marchands et leurs processeurs acquéreurs associés.

14. Système informatique selon la revendication 9, dans lequel la première technique de cryptage et la seconde technique de cryptage comportent une clé unique dérivée par transaction (*DUKPT*)*.*
